# EUROPEAN PATENT APPLICATION

(11) **EP 4 790 452 A2**
(43) Date of publication of application: **12.08.2026**
(21) Application number: 26155158.4
(22) Date of filing: 29.01.2026
(51) Int. Cl.: G01S 7/481, G01S 7/497

(54) **CHIP MODULE, SELF-TESTING METHOD, PREPARATION METHOD FOR RECEIVING CHIP AND LIDAR**

(30) Priority: 11.02.2025 CN 202510151820
(71) Applicant: Suteng Innovation Technology Co., Ltd., Shenzhen City Guangdong 518000 (CN)
(72) Inventor: LIAO, Yumin, Shenzhen City (CN); HUANG, Renfang, Shenzhen City (CN); WU, Hongtao, Shenzhen City (CN)
(74) Representative: Ran, Handong

(57) **Abstract**

A chip module includes a packaging substrate, a system-on-chip disposed on a surface of the packaging substrate, a laser emission chip disposed on the system-on-chip and configured to emit laser signals, and at least two receiving chips disposed on the system-on-chip. The receiving chips include a first receiving chip configured to receive echo laser signals and a second receiving chip configured to receive visible light signals. A cover is disposed on the packaging substrate, wherein the cover and the packaging substrate jointly enclose to form an installation cavity, the system-on-chip, the laser emission chip, the first receiving chip, and the second receiving chip are all located within the installation cavity. The cover is provided with a first region for laser signals to pass through, a second region for echo laser signals to pass through, and a third region for visible light signals to pass through.

## Description

### TECHNICAL FIELD

The present application relates to the field of LiDAR technology, and in particular to a chip module, a self-testing method, a preparation method for a receiving chip, and a LiDAR.

### BACKGROUND

As important sensors in vehicular systems, the fusion of data from LiDAR and cameras is currently a significant development direction for vehicular/robotic information sensing. At present, LiDAR and cameras are typically two independent devices that need to be placed at different locations on a vehicle/robot. Due to the inconsistency in their data acquisition positions, the unified coordinate calculation for their data is very complex and prone to information mismatch during the data fusion process. Furthermore, LiDAR and cameras being two separate devices also leads to occupying a relatively large physical space, which is not conducive to the integration and miniaturization of sensor devices.

### SUMMARY

The present application provides a chip module, a self-testing method, a preparation method for a receiving chip, and a LiDAR, aiming to improve the current situation where LiDAR and cameras occupy a large overall physical space when used in cooperation, which is not conducive to miniaturization.

In a first aspect, the present application provides a chip module, including a packaging substrate, a system-on-chip, a laser emission chip, at least two receiving chips, and a cover. The system-on-chip is disposed on a surface of the packaging substrate. The laser emission chip is disposed on a surface of the system-on-chip and is configured to emit laser signals. The at least two receiving chips are disposed on the surface of the system-on-chip, the at least two receiving chips including a first receiving chip and a second receiving chip. The first receiving chip is configured to receive echo laser signals, and the second receiving chip is configured to receive visible light signals. The cover is disposed on the packaging substrate. The cover and the packaging substrate jointly enclose to form an installation cavity. The system-on-chip, the laser emission chip, the first receiving chip, and the second receiving chip are all located within the installation cavity. The cover is provided with a first region for laser signals to pass through, a second region for echo laser signals to pass through, and a third region for visible light signals to pass through. The chip module integrates both the laser emission chip and the receiving chips on the system-on-chip, which not only enables a single chip to simultaneously emit and receive laser signals but also enables a single chip to simultaneously receive laser signals and visible light signals, thereby improving the integration level of the chip module and reducing the size of the LiDAR.

In some embodiments, the laser emission chip and the first receiving chip are spaced apart along a first preset direction, and the second receiving chip is located between the laser emission chip and the first receiving chip. Due to the small size of the system-on-chip, the laser emission chip disposed on its surface, the chip for receiving echo laser signals, and the chip for receiving visible light signals are positioned close to each other. On the one hand, the close proximity between the laser emission chip and the chip for receiving echo laser signals reduces the field of view blind spots. On the other hand, the close proximity between the chip for receiving echo laser signals and the chip for receiving visible light signals on the system-on-chip makes the spatial positions for receiving laser signals and visible light signals nearly identical, thereby reducing errors in the coordinate unification calculation of point cloud data and image data, and improving the accuracy of data fusion.

In some embodiments, the laser emission chip and the first receiving chip are spaced apart along a first preset direction, and the second receiving chip and the first receiving chip are spaced apart along a second preset direction; wherein the second preset direction is perpendicular to the first preset direction. This arrangement increases the distance between the laser emission chip, the chip for receiving echo laser signals, and the chip for receiving visible light signals, thereby reducing thermal crosstalk between the chips. However, due to the overall small size of the system-on-chip, the field of view blind spots caused by this distance and the difficulty in fusing point cloud data with image data are still acceptable.

In some embodiments, the cover includes a side wall and a top wall. One end of the side wall which is fixed to a first surface of the packaging substrate where the system-on-chip is disposed, and another end extends away from the first surface. The top wall is fixed to an end of the side wall away from the first surface, so that the packaging substrate, the side wall, and the top wall jointly enclose to form the installation cavity. The top wall is provided with a first lens, a second lens, and a third lens. The first lens constitutes the first region, the second lens constitutes the second region, and the third lens constitutes the third region.

In some embodiments, a region of the top wall other than the first lens, the second lens, and the third lens is coated with an anti-glare coating. The first lens is a wide-angle lens, configured to increase a detection field of view formed by the laser signals emitted by the laser emission chip. By coating the anti-glare coating on the region of the top wall other than the lenses, stray light can be effectively absorbed and suppressed, enhancing signal detection capability. Using a wide-angle lens expands the detection field of view, thereby improving the uniformity and accuracy of detected signals.

In some embodiments, the laser emission chip, the first receiving chip, and the second receiving chip are all electrically connected to the system-on-chip through hybrid bonding. The system-on-chip and the packaging substrate are electrically connected through hybrid bonding. The system-on-chip is provided with through-silicon vias. A first material layer is provided within the through-silicon vias, and a thermal conductivity of the first material layer is higher than a preset threshold. The laser emission chip covers at least one of the through-silicon vias and is electrically connected to the packaging substrate through the first material layer. Hybrid bonding technology achieves high-density interconnection between chips, not only improving system integration, response speed, and performance but also enhancing the connection strength and stability between chips. The first material layer within the through-silicon vias, on the one hand, is configured to supply power to the laser emission chip. On the other hand, it is configured to rapidly conduct heat generated during the operation of the laser emission chip to the packaging substrate, significantly improving heat dissipation efficiency and reducing the thermal resistance of the laser emission chip.

In some embodiments, a signal transceiving cycle of the chip module includes a laser emission period and a laser blanking period. During the laser emission period, the system-on-chip is configured to control the laser emission chip and the first receiving chip to be turned on, and to control the second receiving chip to be turned off. During the laser blanking period, the system-on-chip is configured to control the laser emission chip and the first receiving chip to be turned off, and to control the second receiving chip to be turned on. The above arrangement can effectively avoid interference from the laser signals emitted by the laser emission chip on the reception of visible light signals by the second receiving chip, thereby improving the quality of signals received by the second receiving chip.

In some embodiments, the system-on-chip is configured to receive echo laser signals processed by the first receiving chip and obtain point cloud data based on the processed echo laser signals. The system-on-chip is configured to receive visible light signals processed by the second receiving chip and obtain image data based on the processed visible light signals. The system-on-chip further includes a fusion unit, configured to perform coordinate unification calculation on the point cloud data and the image data to obtain fusion data, the fusion data including the point cloud data and the image data after coordinate unification.

In some embodiments, the system-on-chip further includes a communication interface. The communication interface is configured to transmit the fusion data from the chip module to a device external to the chip module.

In a second aspect, the present application provides a chip module self-testing method, applied to the chip module according to any of the above embodiments. The method includes: controlling the laser emission chip to emit laser signals toward a preset scene; receiving first excitation data and second excitation data generated by the first receiving chip, wherein the first excitation data is pre-stored point cloud data obtained based on the preset scene, and the second excitation data is the echo signals actually received according to the laser signals; receiving third excitation data generated by the second receiving chip, wherein the third excitation data is pre-stored image data obtained based on the preset scene; fusing the first excitation data and the third excitation data to obtain first fusion data, wherein the first fusion data includes information from the first excitation data and the third excitation data; obtaining a first comparison result between the first excitation data and the second excitation data; obtaining a second comparison result between the first fusion data and expected data, wherein the expected data is a result pre-fused from the first excitation data and the third excitation data; and determining, based on the first comparison result and the second comparison result, whether any of the system-on-chip, the laser emission chip, the first receiving chip, the second receiving chip, or a signal pathway of the packaging substrate is abnormal, wherein the first excitation data and the third excitation data both correspond to the same preset scene. By adopting the above method for self-testing the chip, self-testing can be achieved within the chip without requiring additional testing equipment or devices, thereby reducing testing costs, significantly shortening the testing process and testing time, and improving testing efficiency.

In a third aspect, the present application provides a preparation method for a receiving chip, applied to the chip module according to any of the above embodiments. The receiving chip includes a device layer and a substrate layer. The device layer is connected to the system-on-chip, and the substrate layer is located on a side of the device layer opposite to the system-on-chip. The preparation method for the receiving chip includes:
Step S1: Performing photolithography on the substrate layer using a mask with a preset width, so that the substrate layer forms a first boss and first recessed grooves located on both sides of the first boss;
Step S2: Performing photolithography on a partial region of the recessed groove formed in the previous round using a mask with a width larger than the mask used in the previous round, so that the substrate layer forms a second boss carrying the boss formed in the previous round, and second recessed grooves located on both sides of the second boss; and
Step S3: Repeatedly executing Step S2.

The boss includes the first boss and the second boss, and the recessed groove includes the first recessed groove and the second recessed groove. By directly performing photolithography on the substrate layer of the receiving chip, not only is the integration level of the receiving chip improved, but high-precision preparation of the receiving chip is also achieved. Furthermore, by directly performing photolithography on the substrate layer of the receiving chip, the entire process from the device layer to the substrate layer of the receiving chip can be completed at the same location, shortening the processing time of the receiving chip.

In some embodiments, performing photolithography on the substrate layer using a mask with a preset width, so that the substrate layer forms a first boss and first recessed grooves located on both sides of the first boss, includes: coating a photoresist on a surface of the substrate layer to obtain a first adhesive layer; performing ultraviolet exposure on the first adhesive layer using the mask with the preset width; developing an exposed region of the first adhesive layer, so that the substrate layer forms a first region covered by the first adhesive layer and a second region exposed and provided; etching the second region to obtain the first recessed groove; and removing the first adhesive layer, so that the substrate layer forms the first boss and the first recessed grooves located on both sides of the first boss.

In some embodiments, performing photolithography on a partial region of the recessed groove formed in the previous round using a mask with a width larger than the mask used in the previous round, so that the substrate layer forms a second boss carrying the boss formed in the previous round, and second recessed grooves located on both sides of the second boss, includes: coating a photoresist on a surface of the substrate layer to obtain a second adhesive layer; performing ultraviolet exposure on the second adhesive layer using the mask with the larger width, wherein the mask with the larger width shields the boss formed in the previous round; developing an exposed region of the second adhesive layer, so that the substrate layer forms a third region covered by the second adhesive layer and a fourth region exposed and provided; etching the fourth region to obtain the second recessed groove; and removing the second adhesive layer, so that the substrate layer forms the second boss and the second recessed grooves located on both sides of the second boss.

In a fourth aspect, the present application provides a LiDAR, including a housing and the chip module according to any of the above embodiments. The chip module is disposed within the housing.

The present application discloses a chip module, a self-testing method, a preparation method for a receiving chip, and a LiDAR. On the one hand, by integrating both the chip for receiving echo laser signals and the chip for receiving visible light signals onto the system-on-chip, the spatial positions for receiving the laser signals and the visible light signals are made nearly identical, thereby reducing errors in the coordinate unification calculation of point cloud data and image data, and improving the accuracy of data fusion.

On the other hand, by integrating both the laser emission chip and the receiving chips onto the system-on-chip, not only is the integration level of the chip module improved and the size of the LiDAR reduced, but also the data transmission distance between chips is significantly shortened, reducing signal delay during transmission. Thereby enhancing the response speed and data processing efficiency of the chip module, helping to better calibrate and synchronize the operation of each chip, and consequently improving the accuracy of distance measurement, image acquisition, etc.

### BRIEF DESCRIPTION OF DRAWINGS

FIG. 1 is a schematic diagram of a side view of a chip module disclosed in an embodiment of the present application;
FIG. 2 is a schematic diagram of time-division multiplexing between a laser emission chip and a second receiving chip disclosed in an embodiment of the present application;
FIG. 3 is a schematic diagram of a top view of a chip module disclosed in an embodiment of the present application;
FIG. 4 is a schematic diagram of a top view of a chip module disclosed in an embodiment of the present application;
FIG. 5 is a schematic communication diagram of a chip module disclosed in an embodiment of the present application;
FIG. 6 is a flowchart of a chip module self-testing method disclosed in an embodiment of the present application;
FIG. 7 is a schematic diagram of a receiving chip disclosed in an embodiment of the present application;
FIG. 8 is a flowchart of a preparation method for a receiving chip disclosed in an embodiment of the present application;
FIG. 9 is a flowchart of the manufacturing process corresponding to step S1 in FIG. 8; and
FIG. 10 is a flowchart of the manufacturing process corresponding to step S2 in FIG. 8.

Reference signs: 1, chip module; 10, packaging substrate; 11, system-on-chip; 12, laser emission chip; 13, receiving chip; 13a, first receiving chip; 13b, second receiving chip; 14, cover; 111, through-silicon via; 140, side wall; 141, top wall; 1411, first lens; 1412, second lens; 1413, third lens; 110, bus; 120, main control unit; 130, laser emission control unit; 150, first serial interface; 151, second serial interface; 160, control unit; 170, storage unit; 180, fusion unit; 190, transmission unit; 191, communication interface; 2, external device; 131, device layer; 132, substrate layer; 133, first adhesive layer; 134, second adhesive layer; 1321, first boss; 1322, first recessed groove; 1323, second boss; 1324, second recessed groove.

### DETAILED DESCRIPTION

To make the objectives, technical solutions, and advantages of the present application clearer, the technical solutions in the embodiments of the present application will be clearly and thoroughly described below in conjunction with the accompanying drawings in the embodiments of the present application. Obviously, the described embodiments are part of the embodiments of the present application, but not all of them. It should be understood that the specific embodiments described herein are only used to explain the present application and are not intended to limit the present application.

The fusion of point cloud data from LiDAR and image data from traditional cameras is a significant development direction for vehicular/robotic information sensing. Currently, LiDAR and cameras are typically two independent devices, placed at different locations on a vehicle/robot. Due to the inconsistency in the information acquisition positions of the LiDAR and cameras, the coordinate unification calculation during the fusion of point cloud data and image data is very complex and prone to information mismatch. Furthermore, because LiDAR r and cameras are two separate devices, they occupy a relatively large physical space, which is not conducive to the integration and miniaturization of sensors.

The present application aims to provide a chip module, a self-testing method, a preparation method for a receiving chip, and a LiDAR, aiming to improve the current situation where LiDAR and cameras occupy a large overall physical space when used in cooperation, which is not conducive to miniaturization. Furthermore, the chip module can also improve the integration level of the chip module, reduce errors in the coordinate unification calculation of point cloud data and image data, and improve the accuracy of the fusion of point cloud data and image data. The embodiments in the present application are all described by taking the chip module 1 applied to LiDAR as an example. However, in other embodiments of the present application, the chip module 1 can also be applied to other products, such as robots, unmanned aerial vehicles, etc.

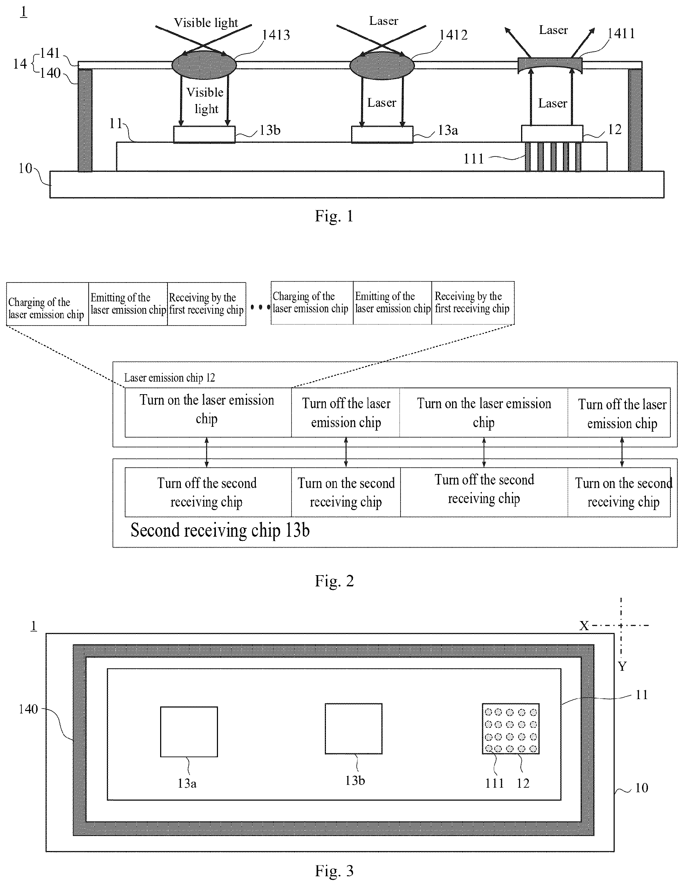

As shown in FIG. 1, which is a schematic diagram of a side view of a chip module 1 disclosed in an embodiment of the present application. The chip module 1 includes a packaging substrate 10, a system-on-chip 11 (System on Chip, SoC), a laser emission chip 12, at least two receiving chips 13, and a cover 14. The system-on-chip 11 is disposed on a surface of the packaging substrate 10. The laser emission chip 12 is disposed on a surface of the system-on-chip 11 and is configured to emit laser signals. The at least two receiving chips 13 include a first receiving chip 13a and a second receiving chip 13b, both disposed on the surface of the system-on-chip 11. The first receiving chip 13a is configured to receive echo laser signals, and the second receiving chip 13b is configured to receive visible light signals. The cover 14 is disposed on the packaging substrate 10. The cover 14 and the packaging substrate 10 jointly enclose to form an installation cavity. The system-on-chip 11, the laser emission chip 12, the first receiving chip 13a, and the second receiving chip 13b are all located within the installation cavity. The cover 14 is provided with a first region 1411 for laser signals to pass through, a second region 1412 for echo laser signals to pass through, and a third region 1413 for visible light signals to pass through.

The packaging substrate 10 serves not only as a base for mounting the system-on-chip 11 and the cover 14, but also for achieving electrical connection between the chip module 1 and external devices of the chip module 1. In an embodiment, the packaging substrate 10 includes conductive structures for enabling electrical connection between the chip module 1 and external circuits, ensuring the normal operation of the chip module 1.

The system-on-chip 11 is disposed on the surface of the packaging substrate 10 and is configured to support the laser emission chip 12, the first receiving chip 13a, and the second receiving chip 13b. The laser emission chip 12 is disposed on the surface of the system-on-chip 11 and is configured to emit laser signals. In an embodiment, the laser of the laser emission chip 12 is a Vertical-Cavity Surface-Emitting Laser (VCSEL), and the number of VCSELs is multiple, arranged in an array on the laser emission chip 12. In an embodiment, the wavelength range of laser signals emitted by the laser emission chip 12 is from 850 nm to 1600 nm.

In some embodiments, the system-on-chip 11 is provided with through-silicon vias 111 (Through-Silicon Via, TSV). A first material layer is provided within the through-silicon via 111, and the thermal conductivity of the first material layer is higher than a preset threshold. The laser emission chip 12 covers at least one through-silicon via 111 and is electrically connected to the packaging substrate 10 through the first material layer. In an embodiment, the preset threshold is 300 W/(m·K), and the first material layer includes copper or other media with high thermal conductivity.

On the system-on-chip 11, the region and position of the laser emission chip 12 need to be determined first, and then through-silicon vias 111 are formed at the position of the laser emission chip 12 on the system-on-chip 11. The process for forming the through-silicon vias 111 includes etching, insulating layer deposition, barrier layer deposition, filling, annealing, Chemical-Mechanical Planarization (CMP), and wafer thinning.

In an embodiment, holes are first formed on the system-on-chip 11 by etching. Then, insulating layer deposition and barrier layer deposition are performed within the holes, followed by electroplating to fill the holes with copper. Finally, after Chemical-Mechanical Planarization and wafer thinning, through-silicon vias 111 are formed on the system-on-chip 11, and bonding metal pads (pads), i.e., copper pads, are formed on the through-silicon vias 111. In an embodiment, the first material layer within the through-silicon vias 111 is copper.

On the one hand, the through-silicon vias 111 are configured to achieve electrical connection between the laser emission chip 12 and the packaging substrate 10. The packaging substrate 10 supplies power to the laser emission chip 12 through the through-silicon vias 111. On the other hand, when the laser emission chip 12 is operating, the heat generated by the laser emission chip 12 can be rapidly conducted to the packaging substrate 10 through the first material layer within the through-silicon vias 111, effectively improving the heat dissipation efficiency of the chip and reducing its thermal resistance.

The first receiving chip 13a and the second receiving chip 13b are respectively disposed on the surface of the system-on-chip 11. The first receiving chip 13a is configured to receive echo laser signals, and the second receiving chip 13b is configured to receive visible light signals. In an embodiment, the wavelength range of echo laser signals received by the first receiving chip 13a is from 850 nm to 1600 nm, and the wavelength range of visible light signals received by the second receiving chip 13b is from 400 nm to 700 nm.

The echo laser signal refers to the laser emitted by the laser emission chip 12 being reflected by objects within the detection range. Information about objects within the detection range, such as physical distance, speed, and shape, can be obtained through the echo laser signal. The visible light signal refers to the visible light reflected by objects within the detection range. Information about objects within the detection range, such as brightness, color, shape, and contour, can be obtained through the visible light signal.

In some embodiments, the laser emission chip 12, the first receiving chip 13a, and the second receiving chip 13b are all electrically connected to the system-on-chip 11 through hybrid bonding (Hyper Bonding). The system-on-chip 11 and the packaging substrate 10 are electrically connected through hybrid bonding. In an embodiment, the first receiving chip 13a is an array single-photon avalanche diode (Single Photon Avalanche Diode, SPAD) chip, referred to as an array SPAD chip. In an embodiment, the second receiving chip 13b is a CMOS image sensor (CMOS Image Sensor, CIS) chip, referred to as a CIS chip.

The laser emission chip 12, the first receiving chip 13a, and the second receiving chip 13b are directly bonded to the copper pads of the system-on-chip 11 through hybrid bonding technology, achieving copper-to-copper connection. This realizes the electrical connection between the laser emission chip 12, the first receiving chip 13a, the second receiving chip 13b, and the system-on-chip 11, respectively. Hybrid bonding embeds metal pads within the bonding interface, preventing signal interference between pads and thereby improving signal integrity and stability. Because hybrid bonding uses a direct copper-to-copper connection method, it reduces the signal transmission paths between the chips in the chip module 1, thereby increasing data transmission speed; it also reduces the need for physical connections between chips, lowering mechanical stress and resistance within the chip, and consequently reducing power consumption.

The hybrid bonding technology integrates the laser emission chip 12, the first receiving chip 13a, the second receiving chip 13b, the system-on-chip 11, and the packaging substrate 10 in a vertically stacked manner. This not only improves the integration level of the chip module 1, achieves high-density interconnection between chips, reduces the size of the LiDAR, but also enhances the connection strength and stability between chips. In addition, the hybrid bonding technology effectively reduces the thermal resistance of the chip module 1 and improves heat dissipation performance through its compact structure and direct conductive paths.

In some embodiments, a signal transceiving cycle of the chip module 1 includes a laser emission period and a laser blanking period. During the laser emission period, the system-on-chip 11 is configured to control the laser emission chip 12 and the first receiving chip 13a to be turned on, and to control the second receiving chip 13b to be turned off. At this time, echo laser signals can be received through the first receiving chip 13a to obtain point cloud data. During the laser blanking period, the system-on-chip 11 is configured to control the laser emission chip 12 and the first receiving chip 13a to be turned off, and to control the second receiving chip 13b to be turned on. At this time, visible light signals can be received through the second receiving chip 13b to obtain image data.

In some embodiments, the system-on-chip 11 is configured to receive echo laser signals processed by the first receiving chip 13a and obtain point cloud data based on the processed echo laser signals. The system-on-chip 11 is also configured to receive visible light signals processed by the second receiving chip 13b and obtain image data based on the processed visible light signals.

In an embodiment, the period during which the laser emission chip 12 is turned off is referred to as the laser blanking period. Taking a LiDAR using a Micro-Electro-Mechanical System (MEMS) galvanometer, referred to as a MEMS galvanometer, to achieve scanning as an example for illustration. Taking the scanning cycle of the MEMS galvanometer starting from the upper left corner and ending at the lower left corner as an example, a retrace is required after each scanning cycle, i.e., the galvanometer returns from the lower left corner to the starting position at the upper left corner to begin the next scanning cycle. This retrace process is the laser blanking period. During the laser blanking period, the laser emission chip 12 does not emit laser, and the first receiving chip 13a does not receive echo laser; only the second receiving chip 13b receives visible light. During the scanning cycle of the MEMS galvanometer, i.e., the laser emission period, the laser emission chip 12 emits laser, and the first receiving chip 13a receives echo laser. Therefore, the point cloud data obtained by the system-on-chip 11 during the laser emission period and the image data obtained by the system-on-chip 11 during the laser blanking period correspond to data from the same detection range within the same cycle of the LiDAR. In an embodiment, the LiDAR uses a rotating mirror for scanning.

As shown in FIG. 2, which is a schematic diagram of time-division multiplexing between the laser emission chip 12 and the second receiving chip 13b disclosed in an embodiment of the present application. In an embodiment, a working cycle of the laser emission chip 12 is divided into two time periods: the laser emission chip 12 being turned on and the laser emission chip 12 being turned off. During the entire operation of the chip module 1, the laser emission chip 12 continuously repeats this working cycle.

The time period during which the laser emission chip 12 is turned on includes three consecutive stages: charging of the laser emission chip 12, emitting, and receiving by the first receiving chip 13a. Charging of the laser emission chip 12 refers to the laser emission chip 12 receiving power supply from the packaging substrate 10, causing electrons within the laser emission chip 12 to transition from a low energy level to a high energy level, thereby preparing energy for laser emission. Emitting of the laser emission chip 12 refers to, after the charging of the laser emission chip 12 is completed, the laser emission chip 12 emitting laser toward the detection range. Receiving by the first receiving chip 13a refers to, after the emission of the laser emission chip 12, the first receiving chip 13a receiving the echo laser reflected by objects within the detection range.

During the time period when the laser emission chip 12 is turned on, the three stages of charging of the laser emission chip 12, emitting, and receiving by the first receiving chip 13a are performed sequentially, forming periodic charging of the laser emission chip 12, emitting, and receiving by the first receiving chip 13a, ensuring that the chip module 1 can continuously perform laser emission and echo laser reception.

A working cycle of the second receiving chip 13b is also divided into two time periods: the second receiving chip 13b being turned off and the second receiving chip 13b being turned on. The time period during which the second receiving chip 13b is turned off corresponds to the time period during which the laser emission chip 12 is turned on, and the time period during which the second receiving chip 13b is turned on corresponds to the time period during which the laser emission chip 12 is turned off.

The time period during which the laser emission chip 12 is turned on is the laser emission period, and the time period during which the laser emission chip 12 is turned off is the laser blanking period. During the laser blanking period, the laser emission chip 12 does not emit laser, and the first receiving chip 13a does not receive echo laser. By employing time-division multiplexing for the laser emission chip 12 and the second receiving chip 13b, interference caused by the laser emission of the laser emission chip 12 on the reception of visible light signals by the second receiving chip 13b is effectively avoided.

As shown in FIG. 3, which is a schematic top view of the chip module 1 disclosed in an embodiment of the present application. In some embodiments, the laser emission chip 12 and the first receiving chip 13a are spaced apart along a first preset direction, and the second receiving chip 13b is located between the laser emission chip 12 and the first receiving chip 13a. In an embodiment, the first preset direction X is the extension direction of the long side of the surface of the system-on-chip 11.

In an embodiment, the first preset direction X is the extension direction of the width side of the surface of the system-on-chip 11, the extension direction of the two diagonals of the surface of the system-on-chip 11, or a direction parallel to the extension direction of the two diagonals of the surface of the system-on-chip 11. Due to the small size of the system-on-chip 11, the laser emission chip 12, the first receiving chip 13a, and the second receiving chip 13b disposed on its surface are positioned close to each other. The close proximity between the laser emission chip 12 and the first receiving chip 13a can reduce field of view blind spots. The close proximity between the second receiving chip 13b and the first receiving chip 13a makes the spatial positions for receiving the laser signal and the visible light signal nearly identical, thereby reducing errors in the coordinate unification calculation of point cloud data and image data, and improving the accuracy of data fusion.

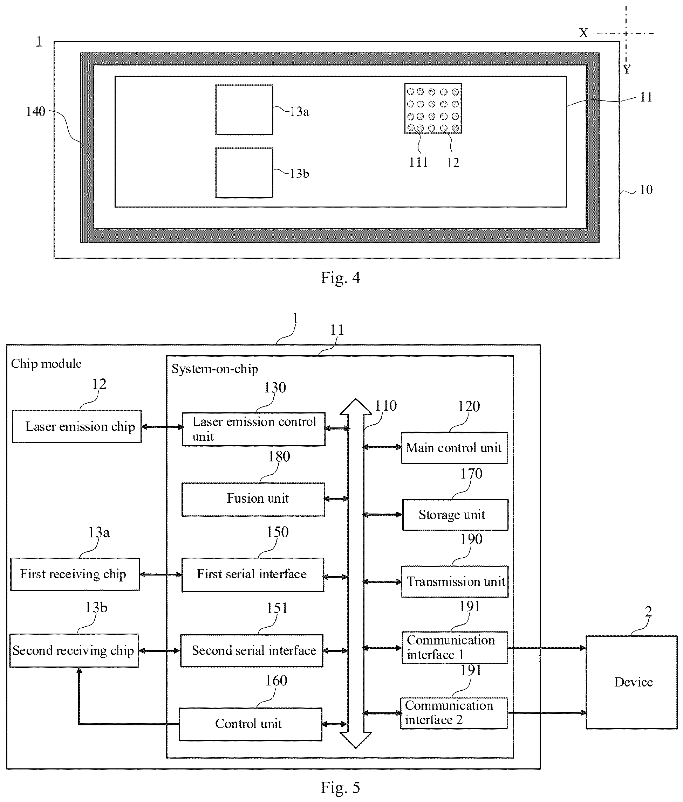

As shown in FIG. 4, which is a schematic top view of the chip module 1 disclosed in an embodiment of the present application. In some embodiments, the laser emission chip 12, the first receiving chip 13a, and the second receiving chip 13b can also not be arranged collinearly. For example, the laser emission chip 12 and the first receiving chip 13a are spaced apart along a first preset direction X, and the second receiving chip 13b and the first receiving chip 13a are spaced apart along a second preset direction Y. The second preset direction Y is perpendicular to the first preset direction X. In an embodiment of the present application, the first preset direction X is the long side direction of the surface of the system-on-chip 11, and the second preset direction Y is the width side direction of the surface of the system-on-chip 11.

In an embodiment, the first preset direction X is the extension direction of the width side of the surface of the system-on-chip 11, and the second preset direction Y is the extension direction of the long side of the surface of the system-on-chip 11. This arrangement increases the spacing between the laser emission chip 12, the first receiving chip 13a, and the second receiving chip 13b, thereby reducing thermal crosstalk between the chips. Although this arrangement increases the spacing between the laser emission chip 12, the first receiving chip 13a, and the second receiving chip 13b, the field of view blind spots caused by this spacing and the difficulty in fusing point cloud data with image data are still acceptable due to the overall small size of the system-on-chip 11.

By arranging the laser emission chip 12, the first receiving chip 13a, and the second receiving chip 13b all on the system-on-chip 11, not only is the integration level of the chip module 1 improved, but the size of the LiDAR is also reduced. It should be understood that the present application imposes no specific limitations on the positions of the laser emission chip 12, the first receiving chip 13a, and the second receiving chip 13b on the system-on-chip 11.

In some embodiments, as shown in FIG. 1, the cover 14 includes a side wall 140 and a top wall 141 for encapsulating the system-on-chip 11, the laser emission chip 12, the first receiving chip 13a, and the second receiving chip 13b. One end of the side wall 140 is fixed to a first surface of the packaging substrate 10 where the system-on-chip 11 is disposed, and the other end extends away from the first surface. The top wall 141 is fixed to an end of the side wall 140 away from the first surface, so that the packaging substrate 10, the side wall 140, and the top wall 141 jointly enclose to form an installation cavity, which is configured to secure and protect the system-on-chip 11, the laser emission chip 12, the first receiving chip 13a, and the second receiving chip 13b, preventing displacement or damage of the chips within the cavity during packaging or transportation. In an embodiment, the material of the side wall 140 comprises Dual Adhesive Material (DMA), and the material of the top wall 141 includes glass.

As shown in FIG. 3, from a top view perspective, the area of the closed region formed by the side wall 140 on the packaging substrate 10 is larger than the area of the system-on-chip 11, but smaller than the area of the packaging substrate 10.

In an embodiment, the top wall 141 is fixed to the end of the side wall 140 away from the first surface by being bonded to the side wall 140 with adhesive, thereby achieving encapsulation of the system-on-chip 11, the laser emission chip 12, the first receiving chip 13a, and the second receiving chip 13b within the cavity, ensuring good airtightness and watertightness within the cavity. Furthermore, bonding the side wall 140 and the top wall 141 with adhesive also effectively prevents rainwater or dust from entering the cavity and damaging the chips.

In some embodiments, as shown in FIG. 1, the top wall 141 is provided with a first lens, a second lens, and a third lens. The first lens constitutes a first region 1411, the second lens constitutes a second region 1412, and the third lens constitutes a third region 1413. The first lens is configured to expand the laser emitted by the laser emission chip 12, so that the expanded laser illuminates objects within the detection range of the LiDAR. The second lens is configured to refract the echo laser into the sealed cavity, obtain the refracted laser, and focus the refracted laser onto the first receiving chip 13a. The third lens is configured to refract visible light into the sealed cavity, obtain the refracted visible light, and focus the refracted visible light onto the second receiving chip 13b. In some embodiments, a region of the top wall 141 other than the first lens, the second lens, and the third lens is coated with an anti-glare layer, configured to absorb and suppress stray light, thereby enhancing signal detection capability.

In some embodiments, the first lens is a wide-angle lens, configured to increase the detection field of view formed by the laser signal emitted by the laser emission chip 12, where the laser emitted by the laser emission chip 12 can be a linear array laser or a planar laser. The second lens and the third lens include convex lenses, configured to focus the echo laser and the visible light from outside the LiDAR onto the first receiving chip 13a and the second receiving chip 13b, respectively. In an embodiment, the top wall 141 is made of glass. On the area of the top wall 141 corresponding to the first receiving chip 13a and the second receiving chip 13b, convex lenses for focusing light, i.e., the second lens and the third lens, are etched. On the area corresponding to the laser emission chip 12, a wide-angle lens for expanding light, i.e., the first lens, is etched.

In an embodiment, the second lens 1412 includes a microlens array. Each microlens in the microlens array corresponds to a SPAD unit in the above array SPAD chip. The microlenses are configured to improve the single-photon detection efficiency of the first receiving chip 13a in low-photon environments, ensuring the accuracy of the point cloud data. The third lens 1413 includes a microlens array and an infrared cut-off filter. The microlens array and the infrared cut-off filter are respectively disposed on two sides of the top wall 141. The microlens array is configured to focus visible light onto the second receiving chip 13b, improving the collection efficiency and imaging quality of the visible light. The infrared cut-off filter is configured to transmit visible light while blocking or reflecting infrared light, ensuring the quality and color accuracy of the image data.

As shown in FIG. 5, FIG. 5 is a schematic communication diagram of a chip module 1 disclosed in an embodiment of the present application. The chip module 1 includes a system-on-chip 11, a laser emission chip 12, a first receiving chip 13a, and a second receiving chip 13b. The laser emission chip 12, the first receiving chip 13a, and the second receiving chip 13b are respectively connected to the system-on-chip 11. The system-on-chip 11 is configured to control the laser emission chip 12, the first receiving chip 13a, and the second receiving chip 13b.

In an embodiment, after the system-on-chip 11 is powered on, it first performs initialization settings for the laser emission chip 12, the first receiving chip 13a, and the second receiving chip 13b. The system-on-chip 11 sets parameters such as the emission power, pulse width, and frequency of the laser emission chip 12. It sets parameters such as the detection threshold of the first receiving chip 13a to improve its response capability to laser signals, and it sets parameters such as the exposure time of the second receiving chip 13b to ensure that high-quality image data can be obtained. The initialization settings performed by the system-on-chip 11 for the laser emission chip 12, the first receiving chip 13a, and the second receiving chip 13b also include error detection and handling to ensure that the hardware devices of the laser emission chip 12, the first receiving chip 13a, and the second receiving chip 13b are functioning properly, with any issues being identified by the system-on-chip 11 and corresponding measures being taken.

After the system-on-chip 11 performs the initialization settings for the laser emission chip 12, the first receiving chip 13a, and the second receiving chip 13b, the system-on-chip 11 controls the laser emission chip 12 to emit laser and controls the first receiving chip 13a to receive the echo laser signal within the detection range. The received signal is transmitted to the system-on-chip 11, and after a series of processing by the system-on-chip 11, point cloud data is ultimately obtained. After the first receiving chip 13a receives the echo laser signal within the detection range, the system-on-chip 11 controls the laser emission chip 12 and the first receiving chip 13a to turn off, and controls the second receiving chip 13b to turn on to receive visible light within the detection range. This data is transmitted to the system-on-chip 11, and after a series of processing by the system-on-chip 11, image data is ultimately obtained. The system-on-chip 11 performs coordinate unification calculation and fusion on the point cloud data and the image data to obtain fusion data, and transmits the fusion data to an external device 2.

In some embodiments, the system-on-chip 11 includes a bus 110, a main control unit 120, a laser emission control unit 130, a first serial interface 150, a second serial interface 151, a control unit 160, a storage unit 170, a fusion unit 180, a transmission unit 190, and a communication interface 191. The number of communication interfaces 191 is two, including communication interface 1 and communication interface 2.

The bus 110 is a set of physical lines or electronic signals configured for data transmission. The bus typically includes three parts: an address bus, a data bus, and a control bus, configured to transmit addresses, data, and control signals. The bus 110 connects various units and interfaces within the system-on-chip 11, enabling them to communicate and exchange data with each other.

The main control unit 120 is the core part of the entire system-on-chip 11, connected to the bus 110, and is configured to execute instructions, process data, and control other units. In an embodiment, the main control unit 120 includes a Central Processing Unit (CPU).

The laser emission control unit 130 is connected to the bus 110 and the laser emission chip 12, and is configured to control the turning on and off of the laser emission chip 12. In an embodiment, the main control unit 120 controls the laser emission control unit 130 through the bus 110, outputting control instructions to the laser emission chip 12. After receiving the control instructions, the laser emission chip 12 emits laser toward the detection range.

The first serial interface 150 is connected to the first receiving chip 13a and is configured to transmit electrical signals converted by the first receiving chip 13a based on the received echo laser signals to the system-on-chip 11. In an embodiment, the first receiving chip 13a converts the received echo laser signals into electrical signals, which are then encoded and formatted using a serial communication protocol to ensure the integrity and reliability of the signals during transmission. The encoded and formatted signals are transmitted to the system-on-chip 11 through the first serial interface 150. The system-on-chip 11 receives and decodes these signals, then performs further processing and analysis, ultimately obtaining point cloud data.

The second serial interface 151 is connected to the second receiving chip 13b and is configured to transmit electrical signals converted by the second receiving chip 13b based on the received visible light signals to the system-on-chip 11. In an embodiment, the second receiving chip 13b converts the received visible light signals into electrical signals, which are then encoded and formatted using a serial communication protocol to ensure the integrity and reliability of the signals during transmission. The encoded and formatted signals are transmitted to the system-on-chip 11 through the second serial interface 151. The system-on-chip 11 receives and decodes these signals, then performs further processing and analysis, ultimately obtaining image data.

In an embodiment, both the first serial interface 150 and the second serial interface 151 include a MIPI CSI (Camera Serial Interface) interface. The MIPI CSI interface is a high-speed serial interface designed for mobile devices, primarily configured for data transmission between cameras and processors, featuring high bandwidth, low power consumption, and high reliability. The MIPI CSI interface supports high-speed data transmission, meeting the demands of high-resolution image and video transmission, and also supports multiple pixel formats, enabling it to adapt to different image processing requirements.

The control unit 160 is connected to the bus 110 and the second receiving chip 13b and is configured to control the turning on and off of the second receiving chip 13b. In an embodiment, the main control unit 120 controls the control unit 160 through the bus 110, outputting control instructions to the second receiving chip 13b. After receiving the control instructions, the second receiving chip 13b begins to receive visible light within the detection range and transmits the visible light signal to the system-on-chip 11 through the second serial interface 151. Simultaneously, the main control unit 120 controls the laser emission chip 12 to turn off through the bus 110 and the laser emission control unit 130, and controls the first receiving chip 13a to turn off through the bus 110. The main control unit 120 controls the control unit 160 through the bus 110 to output control instructions after the laser emission chip 12 and the first receiving chip 13a are turned off.

The storage unit 170 is connected to the bus 110 and is configured to buffer point cloud data and image data within the same cycle. The same cycle includes a laser emission period and a laser blanking period. The laser emission period is when the laser emission chip 12 and the first receiving chip 13a are turned on, and the second receiving chip 13b is turned off. The laser blanking period is when the laser emission chip 12 and the first receiving chip 13a are turned off, and the second receiving chip 13b is turned on. In an embodiment, the storage unit includes a frame buffer.

In some embodiments, the system-on-chip 11 further includes a fusion unit 180. The fusion unit 180 is connected to the bus 110 and is configured to perform coordinate unification calculation on the point cloud data and the image data to obtain fusion data. The fusion data includes the point cloud data and the image data after coordinate unification. The fusion unit 180 is also configured to continue transmitting the fusion data to the storage unit 170 for buffering.

When the fusion unit 180 fuses the point cloud data and the image data, since the spatial positions of the laser signals and the visible light signals received by the first receiving chip 13a and the second receiving chip 13b are nearly identical, the calculation for coordinate transformation can be simplified. This achieves precise registration during the fusion of point cloud data and image data, improving the accuracy and reliability of the fusion data.

In an embodiment, the fusion unit 180 is configured to map color information from the image data onto the point cloud data, generating colorized point cloud data. This not only makes the point cloud data more vivid and intuitive, but also facilitates subsequent three-dimensional reconstruction and visual analysis. After color filling the fusion data, global optimization is performed to adjust the parameters of the image data and point cloud data, ensuring consistency between the image data and point cloud data in space, color, and time. For data obtained from multiple scans, stitching processing is also required to generate a complete panoramic scene view. By fusing point cloud data and image data, the fusion unit 180 can provide accurate three-dimensional spatial information, thereby enhancing environmental perception capabilities. Particularly in fields such as autonomous driving, this fusion can significantly improve a vehicle's understanding of its surroundings.

A transmission unit 190 is connected to the bus 110 and is configured to move the fusion data from the storage unit 170 to the communication interface 191. In an embodiment, the transmission unit 190 is a Direct Memory Access (DMA) unit. The Direct Memory Access allows peripheral devices to directly access system memory without the control of the Central Processing Unit, which can significantly improve data transfer rates, reduce the burden on the Central Processing Unit, and enhance overall system performance.

In some embodiments, the system-on-chip 11 further includes a communication interface 191. The communication interface 191 is connected to the bus 110 and is configured to transmit the fusion data from the chip module 1 to a device 2 external to the chip module. The communication interface 191 includes communication interface 1 and communication interface 2, which are different from each other. The fusion data buffered in the storage unit 170 is moved to communication interface 1 or communication interface 2 through the transmission unit 190 and is then transmitted to the external device 2 through communication interface 1 or communication interface 2, achieving highly flexible data communication.

In an embodiment, communication interface 1 includes a wired interface, and communication interface 2 includes a wireless interface; or, communication interface 1 includes a wireless interface, and communication interface 2 comprises a wired interface. The wired interface is configured to transmit fusion data through physical media, and the wireless interface is configured to transmit fusion data through radio waves. In an embodiment, the wired interface includes Ethernet, and the wireless interface includes Wi-Fi.

In an embodiment, when the chip module 1 is installed in an electrical device such as a LiDAR, an electric vehicle, an electric two-wheeler, an electric three-wheeler, a robot, etc., the external device 2 includes a memory or a processor within that electrical device. After receiving the fusion data, the external device 2 uses this fusion data for object detection and classification to identify and understand objects in the surrounding environment, such as vehicles, pedestrians, traffic signs, etc. The external device 2 is also responsible for tracking multi-frame information, calculating and predicting the motion trajectories of obstacles, and performing semantic understanding of special scenes including traffic lights, road signs, construction zones, etc. The processed data is then output to a decision-making system for path planning, thereby enabling the safe driving of autonomous vehicles. In an embodiment, the external device 2 also include a hard disk, a remote server, or cloud storage, configured for storing and analyzing the fused data to facilitate further analysis and processing.

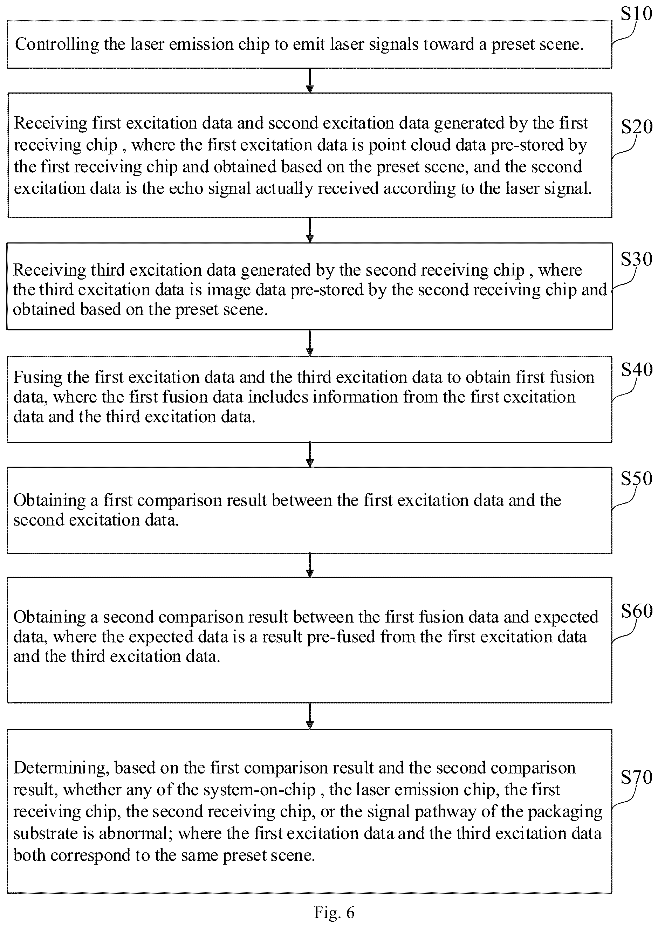

As shown in FIG. 6, FIG. 6 is a flowchart of a chip module 1 self-testing method disclosed in an embodiment of the present application. It should be understood that the chip module 1 self-testing method provided by the embodiment of the present application is applied to the above chip module 1. The chip module 1 can be installed in any device, including but not limited to: LiDAR, vehicle-mounted equipment, handheld devices, wearable devices, or computing devices. In the following embodiments of the present application, the device executing this method is taken as the system-on-chip 11 within the chip module 1 for illustrative purposes. The specific steps of the method are as follows:
S10: Controlling the laser emission chip 12 to emit laser signals toward a preset scene.

In some embodiments, the system-on-chip 11 outputs control instructions through the laser emission control unit 130, causing the laser emission chip 12 to emit laser signals toward the preset scene.

S20: Receiving first excitation data and second excitation data generated by the first receiving chip 13a, where the first excitation data is point cloud data pre-stored by the first receiving chip 13a and obtained based on the preset scene, and the second excitation data is the echo signal actually received according to the laser signal.

In some embodiments, the system-on-chip 11 receives the first excitation data and the second excitation data through the first serial interface 150. The first excitation data is point cloud data pre-stored by the first receiving chip 13a and obtained based on the preset scene. The second excitation data is the echo signal actually received according to the laser signal. Before executing step S20, a LiDAR including a receiving chip with specifications identical to the first receiving chip 13a probes the preset scene to obtain corresponding point cloud data. The point cloud data is stored in the first receiving chip 13a to serve as reference data for chip modules 1 applied in mass production. The preset scene corresponding to the first excitation data and the second excitation data are the same scene

S30: Receiving third excitation data generated by the second receiving chip 13b, where the third excitation data is image data pre-stored by the second receiving chip 13b and obtained based on the preset scene.

In some embodiments, the system-on-chip 11 receives the third excitation data via the second serial interface 151. The third excitation data is image data pre-stored by the second receiving chip 13b and obtained based on the preset scene. Before executing step S30, a LiDAR including a receiving chip with specifications identical to the second receiving chip 13b probes the preset scene to obtain corresponding image data. The image data is stored in the second receiving chip 13b to serve as reference data for chip modules 1 applied in mass production. The point cloud data pre-stored by the first receiving chip 13a and the image data pre-stored by the second receiving chip 13b both originate from the same preset scene, meaning the preset scene corresponding to the first excitation data and the third excitation data is the same scene.

S40: Fusing the first excitation data and the third excitation data to obtain first fusion data, where the first fusion data includes information from the first excitation data and the third excitation data.

In some embodiments, the system-on-chip 11 fuses the received first excitation data and third excitation data through the fusion unit 180 to obtain the first fusion data. In an embodiment, the first fusion data includes depth information of the point cloud and color information of the image for the same scene.

S50: Obtaining a first comparison result between the first excitation data and the second excitation data.

In some embodiments, the first excitation data and the second excitation data are transmitted to the main control unit 120 through the first serial interface 150 and the bus 110. The main control unit 120 compares the first excitation data and the second excitation data to obtain the first comparison result. In an embodiment, the first excitation data is pre-stored in a host computer. The second excitation data is first transmitted to the storage unit 170 in the system-on-chip for buffering, then moved by the transmission unit 190 from the storage unit 170 to the communication interface 191. Finally, the communication interface 191 transmits the first fusion data to the host computer, where the host computer compares the first excitation data and the second excitation data to obtain the first comparison result.

S60: Obtaining a second comparison result between the first fusion data and expected data, where the expected data is a result pre-fused from the first excitation data and the third excitation data.

In some embodiments, the expected data is a result pre-fused by the system-on-chip 11 based on the first excitation data and the third excitation data. In an embodiment, point cloud data is obtained by probing the preset scene with a LiDAR, and image data is obtained by performing image acquisition on the preset scene with an image acquisition device. Then, the point cloud data and the image data are fused by a processor or a microcontroller unit (MCU), etc., to obtain the expected data, which is then stored in the system-on-chip 11.

The expected data is pre-stored in the system-on-chip 11 as reference data. The first fusion data is the data actually fused by the system-on-chip 11 based on the first excitation data output by the first receiving chip 13a and the second excitation data output by the second receiving chip 13b after the first receiving chip 13a and the second receiving chip 13b are disposed on the surface of the system-on-chip 11. Therefore, by comparing the first fusion data with the expected data, it can be determined whether the communication between the first receiving chip 13a and the system-on-chip, as well as between the second receiving chip 13b and the system-on-chip, is normal.

In one embodiment, both the first fusion data and the expected data are stored in the storage unit 170 within the system-on-chip 11. The first fusion data and the expected data are transmitted to the main control unit 120 through the bus 110. The main control unit 120 compares the first fusion data and the expected data to obtain the second comparison result. In an embodiment, the expected data is pre-stored in a host computer. The first fusion data is first transmitted to the storage unit 170 in the system-on-chip 11 for buffering, then the transmission unit 190 moves the first fusion data from the storage unit 170 to the communication interface 191. Finally, the communication interface 191 transmits the first fusion data to the host computer, where the host computer compares the expected data and the first fusion data to obtain the second comparison result.

S70: Determining, based on the first comparison result and the second comparison result, whether any of the system-on-chip 11, the laser emission chip 12, the first receiving chip 13a, the second receiving chip 13b, or the signal pathway of the packaging substrate 10 is abnormal; where the first excitation data and the third excitation data both correspond to the same preset scene.

In an embodiment, if the first excitation data and the second excitation data are consistent or have a minor difference in the comparison result, it indicates that the signal pathways of the system-on-chip 11, the laser emission chip 12, and the first receiving chip 13a are normal. If the comparison result between the first excitation data and the second excitation data shows a significant difference, it indicates that the signal pathways of the system-on-chip 11, the laser emission chip 12, and the first receiving chip 13a are abnormal.

In an embodiment, if the first fusion data and the expected data are consistent or have a minor difference in the comparison result, it indicates that the signal pathways of the system-on-chip 11, the first receiving chip 13a, the second receiving chip 13b, and the packaging substrate 10 are normal. If the comparison result between the first fusion data and the expected data shows a significant difference, it indicates that the signal pathways of the system-on-chip 11, the first receiving chip 13a, the second receiving chip 13b, and the packaging substrate 10 are abnormal. Based on the first comparison result and the second comparison result, it can be determined whether any component, including the system-on-chip 11, the laser emission chip 12, the first receiving chip 13a, the second receiving chip 13b, and the packaging substrate 10 in the signal chain is abnormal.

Through the self-testing method of the chip module 1 described above, self-testing can be achieved internally within the chip without requiring additional testing equipment or devices, thereby reducing testing costs, significantly shortening the testing process and time, and improving testing efficiency.

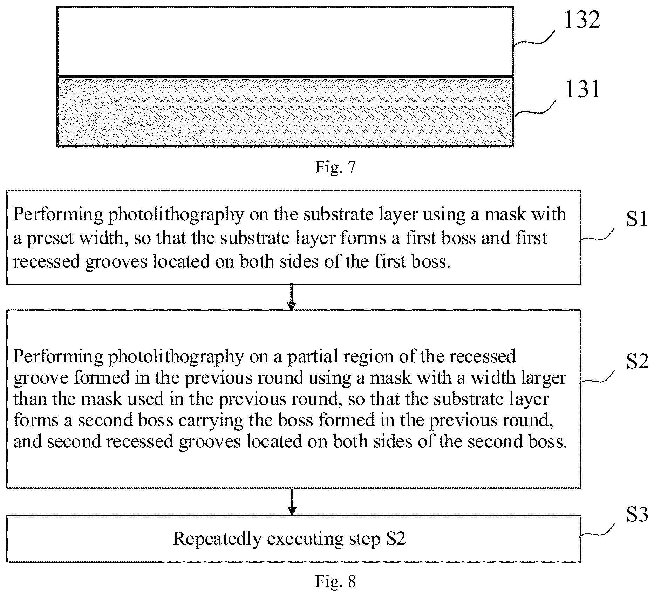

As shown in FIG. 7, FIG. 7 is a schematic diagram of a receiving chip 13 disclosed in an embodiment of the present application. The receiving chip 13 includes a first receiving chip 13a and a second receiving chip 13b. In some embodiments, the receiving chip 13 includes a device layer 131 and a substrate layer 132. The device layer 131 is connected to the system-on-chip 11, and the substrate layer 132 is located on a side of the device layer 131 opposite to the system-on-chip 11.

In an embodiment, the material of the substrate layer 132 is silicon, fabricated through a chemical vapor deposition process. The chemical vapor deposition process is a technique that utilizes chemical reactions of gases on a solid surface to produce solid deposition. Its fundamental principle involves gas-phase reactions at high temperatures, such as the thermal decomposition of metal halides, organometallic compounds, hydrocarbons, etc., or hydrogen reduction, or causing their mixed gases to undergo chemical reactions at high temperatures to deposit inorganic materials like metals, oxides, carbides, etc.

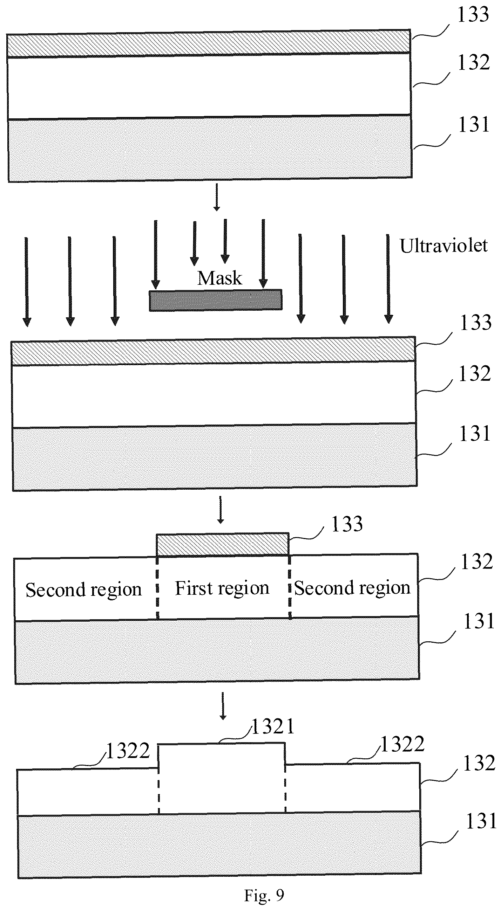

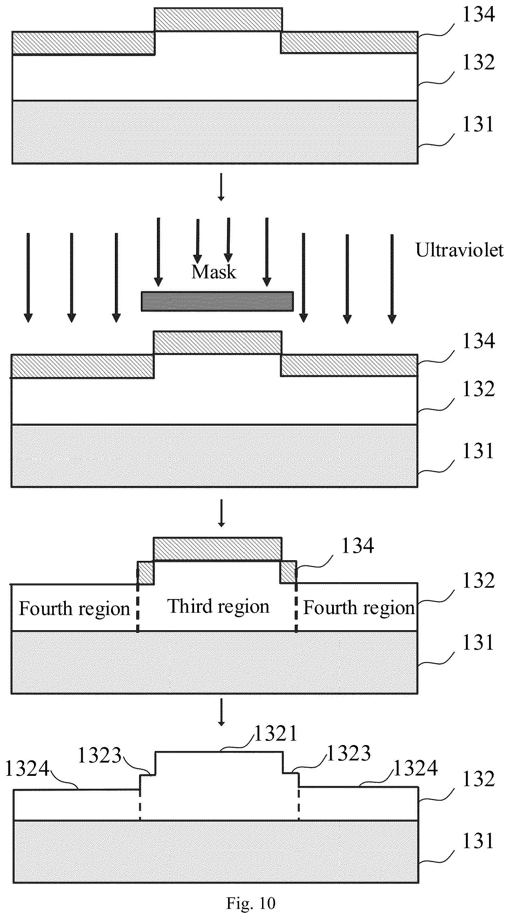

As shown in FIGS. 8 to 10, FIG. 8 is a flowchart of a preparation method for a receiving chip 13 disclosed in an embodiment of the present application, and FIGS. 9 and 10 are flowcharts of manufacturing processes corresponding to the preparation method for the receiving chip 13. It should be understood that the preparation method for the receiving chip 13 provided by the embodiments of the present application is applied to the above chip module 1. The specific steps of the method are as follows:
Step S1: Performing photolithography on the substrate layer 132 using a mask with a preset width, so that the substrate layer 132 forms a first boss 1321 and first recessed grooves 1322 located on both sides of the first boss.

In some embodiments, as shown in FIG. 9, the above step S1 includes: coating a photoresist on a surface of the substrate layer 132 to obtain a first adhesive layer 133; performing ultraviolet exposure on the first adhesive layer 133 using the mask with the preset width; developing an exposed region of the first adhesive layer 133, so that the substrate layer 132 forms a first region covered by the first adhesive layer 133 and a second region exposed and provided; etching the second region to obtain the first recessed grooves 1322; and removing the first adhesive layer 133, thereby forming the first boss 1321 and the first recessed grooves 1322 located on both sides of the first boss on the substrate layer 132.

Step S2: Performing photolithography on a partial region of the recessed groove formed in the previous round using a mask with a width larger than the mask used in the previous round, so that the substrate layer 132 forms a second boss 1323 carrying the boss formed in the previous round, and second recessed grooves 1324 located on both sides of the second boss 1323.

In some embodiments, as shown in FIG. 10, the above step S2 includes: coating a photoresist on the surface of the substrate layer 132 to obtain a second adhesive layer 134; performing ultraviolet exposure on the second adhesive layer 134 using a mask with a larger width, where the mask with the larger width shields the boss formed in the previous round; developing an exposed region of the second adhesive layer 134, so that the substrate layer 132 forms a third region covered by the second adhesive layer 134 and a fourth region exposed and provided; etching the fourth region to obtain the second recessed grooves 1324; and removing the second adhesive layer, thereby forming a second boss 1323 and second recessed grooves 1324 located on both sides of the second boss on the substrate layer 132.

Step S3: Repeatedly executing step S2. The boss includes the first boss 1321 and the second boss 1323, and the recessed groove includes the first recessed groove 1322 and the second recessed groove 1324.

The third region includes the boss formed in the previous round and part of the recessed grooves. For example, the first boss and part of the first recessed groove. The fourth region includes the majority of the recessed groove formed in the previous step. For example, the majority of the first recessed groove.

By repeatedly executing step S2, a shape approximating a curved surface can be formed on the surface of the substrate layer 132 opposite to the device layer 131, where the central area has a greater thickness and the thickness of the side areas gradually decreases, ultimately resulting in a convex lens.

In an embodiment, the mask with the preset width in step S1 represents the process limit of the mask, meaning the preset width of the mask is the minimum width achievable under the current mask fabrication process conditions. The mask width first used in step S2 is greater than the mask width used in step S1. The mask width used when repeatedly executing step S2 in step S3 is greater than the mask width used in the previous round, i.e., the mask width gradually increases, but the maximum mask width is less than the width of the substrate layer 132. The width of the mask in each step after the initial step is greater than the width of the boss formed in the previous step.

In an embodiment, the etching in the above steps is Ion Beam Etching (IBE) or Reactive Ion Etching (RIE). Ion Beam Etching is a dry etching technique that utilizes physical or chemical reactions between an ion beam and the material surface to remove material, thereby achieving precise pattern transfer. Reactive Ion Etching involves bombarding the surface of the object to be etched with a high-energy ion beam while introducing reactive gases. Collisions between the ion beam and gas molecules generate chemically active species and ions. These high-energy ions and active species undergo chemical reactions with the surface of the material to be etched, thereby removing the unwanted material.

As shown in FIG. 8, FIG. 8 is a flowchart of a preparation method for a receiving chip 13 disclosed in an embodiment of the present application. It should be understood that the preparation method for the receiving chip 13 provided by the embodiments of the present application is applied to the above chip module 1. The specific steps of the method are as follows:

In an embodiment, the substrate layer of the receiving chip 13 is prepared using the method steps described above, so that the substrate layer 132 is ultimately fabricated into an integrated lens with an arc shape, where the lens corresponds to the entire receiving chip 13. In an embodiment, the substrate layer of the receiving chip 13 is prepared using the method steps described above, so that the substrate layer 132 is ultimately fabricated into an arc-shaped microlens array. The more times the above steps are repeated, the better the optimization and enhancement of the curvature and precision of the lens's arc shape will be.

In an embodiment, the receiving chip 13 further includes a pixel array and a microlens array, where the pixel array is disposed in the device layer 131, and the microlens array is prepared from the substrate layer 132. Each microlens in the microlens array corresponds one-to-one to each pixel in the pixel array. The specific steps of the above preparation method for the receiving chip 13 involve preparing one microlens on one pixel, enabling the pixel and the microlens to achieve integrated formation.

By directly utilizing semiconductor fabrication methods on the substrate layer 132 of the receiving chip 13 to prepare high-precision microlenses, not only is the quality and performance of the signal received by the receiving chip 13 improved, but the integration level of the receiving chip 13 is also enhanced. The preparation from the device layer to the microlens of the receiving chip 13 can be completed at the same location, shortening the processing time and reducing production costs.

Embodiments of the present application further provide a LiDAR. The LiDAR includes a housing and the chip module 1 according to any embodiment of the present application, where the chip module 1 is disposed within the housing.

## Claims

1. A chip module, comprising:
a packaging substrate;
a system-on-chip, disposed on a surface of the packaging substrate;
a laser emission chip, disposed on a surface of the system-on-chip and configured to emit laser signals;
at least two receiving chips, disposed on the surface of the system-on-chip, the at least two receiving chips comprising a first receiving chip and a second receiving chip, the first receiving chip configured to receive echo laser signals, and the second receiving chip configured to receive visible light signals; and
a cover, disposed on the packaging substrate,
wherein:
the cover and the packaging substrate jointly enclose to form an installation cavity;
the system-on-chip, the laser emission chip, the first receiving chip, and the second receiving chip are all located within the installation cavity; and
the cover is provided with a first region for laser signals to pass through, a second region for echo laser signals to pass through, and a third region for visible light signals to pass through.

2. The chip module according to claim 1, wherein the laser emission chip and the first receiving chip are spaced apart along a first preset direction, and the second receiving chip is located between the laser emission chip and the first receiving chip.

3. The chip module according to claim 1, wherein the laser emission chip and the first receiving chip are spaced apart along a first preset direction, and the second receiving chip and the first receiving chip are spaced apart along a second preset direction,
wherein the second preset direction is perpendicular to the first preset direction.

4. The chip module according to claim 1, wherein the cover comprising:
a side wall, one end of the side wall is fixed to a first surface of the packaging substrate where the system-on-chip is disposed, and another end extending away from the first surface; and
a top wall, fixed to an end of the side wall away from the first surface, so that the packaging substrate, the side wall, and the top wall jointly enclose to form the installation cavity, wherein the top wall is provided with a first lens, a second lens, and a third lens, wherein the first lens constitutes the first region, the second lens constitutes the second region, and the third lens constitutes the third region.

5. The chip module according to claim 4, wherein:
a region of the top wall other than the first lens, the second lens, and the third lens is coated with an anti-glare coating; and
the first lens is a wide-angle lens, configured to increase a detection field of view formed by the laser signals emitted by the laser emission chip.

6. The chip module according to claim 1, wherein:
the laser emission chip, the first receiving chip, and the second receiving chip are all electrically connected to the system-on-chip through hybrid bonding;
the system-on-chip and the packaging substrate are electrically connected through hybrid bonding;
the system-on-chip is provided with through-silicon vias, wherein a first material layer is provided within the through-silicon vias, a thermal conductivity of the first material layer being higher than a preset threshold; and
the laser emission chip covers at least one of the through-silicon vias and is electrically connected to the packaging substrate through the first material layer.

7. The chip module according to claim 6, wherein a signal transceiving cycle of the chip module comprises a laser emission period and a laser blanking period, wherein:
during the laser emission period, the system-on-chip is configured to control the laser emission chip and the first receiving chip to be turned on, and to control the second receiving chip to be turned off; and
during the laser blanking period, the system-on-chip is configured to control the laser emission chip and the first receiving chip to be turned off, and to control the second receiving chip to be turned on.

8. The chip module according to claim 7, wherein:
the system-on-chip is configured to receive echo laser signals processed by the first receiving chip and obtain point cloud data based on the processed echo laser signals;
the system-on-chip is configured to receive visible light signals processed by the second receiving chip and obtain image data based on the processed visible light signals; and
the system-on-chip further comprises a fusion unit, configured to perform coordinate unification calculation on the point cloud data and the image data to obtain fusion data, the fusion data comprising the point cloud data and the image data after coordinate unification.

9. The chip module according to claim 8, wherein the system-on-chip further comprises a communication interface configured to transmit the fusion data from the chip module to a device external to the chip module.

10. A chip module self-testing method, applied to the chip module according to any one of claims 1-9, the method comprising:
controlling the laser emission chip to emit laser signals toward a preset scene;
receiving first excitation data and second excitation data generated by the first receiving chip, wherein the first excitation data is pre-stored point cloud data obtained based on the preset scene, and the second excitation data is the echo signals actually received according to the laser signals;
receiving third excitation data generated by the second receiving chip, wherein the third excitation data is pre-stored image data obtained based on the preset scene;
fusing the first excitation data and the third excitation data to obtain first fusion data, wherein the first fusion data comprises information from the first excitation data and the third excitation data;
obtaining a first comparison result between the first excitation data and the second excitation data;
obtaining a second comparison result between the first fusion data and expected data, wherein the expected data is a result pre-fused from the first excitation data and the third excitation data; and
determining, based on the first comparison result and the second comparison result, whether any of the system-on-chip, the laser emission chip, the first receiving chip, the second receiving chip, or a signal pathway of the packaging substrate is abnormal;
wherein the first excitation data and the third excitation data both correspond to the same preset scene.

11. A preparation method for a receiving chip, applied to the chip module according to any one of claims 1-9, wherein:
the receiving chip comprises a device layer and a substrate layer, wherein the device layer is connected to the system-on-chip, and the substrate layer is located on a side of the device layer opposite to the system-on-chip; and
the preparation method for the receiving chip comprises:
Step S1: performing photolithography on the substrate layer using a mask with a preset width, so that the substrate layer forms a first boss and first recessed grooves located on both sides of the first boss;
Step S2: performing photolithography on a partial region of the recessed groove formed in the previous round using a mask with a width larger than the mask used in the previous round, so that the substrate layer forms a second boss carrying the boss formed in the previous round, and second recessed grooves located on both sides of the second boss; and
Step S3: repeatedly executing Step S2,
wherein the boss comprises the first boss and the second boss, and the recessed groove comprises the first recessed groove and the second recessed groove.

12. The method according to claim 11, wherein said performing photolithography on the substrate layer using a mask with a preset width, so that the substrate layer forms a first boss and first recessed grooves located on both sides of the first boss, comprises:
coating a photoresist on a surface of the substrate layer to obtain a first adhesive layer;
performing ultraviolet exposure on the first adhesive layer using the mask with the preset width;
developing an exposed region of the first adhesive layer, so that the substrate layer forms a first region covered by the first adhesive layer and a second region exposed and provided;
etching the second region to obtain the first recessed groove; and
removing the first adhesive layer, so that the substrate layer forms the first boss and the first recessed grooves located on both sides of the first boss.

13. The method according to claim 11, wherein said performing photolithography on a partial region of the recessed groove formed in the previous round using a mask with a width larger than the mask used in the previous round, so that the substrate layer forms a second boss carrying the boss formed in the previous round, and second recessed grooves located on both sides of the second boss, comprises:
coating a photoresist on a surface of the substrate layer to obtain a second adhesive layer;
performing ultraviolet exposure on the second adhesive layer using the mask with the larger width, wherein the mask with the larger width shields the boss formed in the previous round;
developing an exposed region of the second adhesive layer, so that the substrate layer forms a third region covered by the second adhesive layer and a fourth region exposed and provided;
etching the fourth region to obtain the second recessed groove; and
removing the second adhesive layer, so that the substrate layer forms the second boss and the second recessed grooves located on both sides of the second boss.

14. A LiDAR, comprising a housing and the chip module according to any one of claims 1-9, wherein the chip module is disposed within the housing.
